# EUROPÄISCHE PATENTSCHRIFT

(11) **EP 1 598 522 B1**
(45) Veröffentlichungstag und Bekanntmachung des Hinweises auf die Patenterteilung: **11.07.2007**
(21) Anmeldenummer: 04012135.2
(22) Anmeldetag: 21.05.2004
(51) Int. Cl.: F01D 5/18, F02C 7/16

(54) **Dampfturbinen-Komponente und Verfahren zum Kühlen einer Dampfturbine sowie Verwendung**
Steam turbine components, method for cooling a steam turbine and their use.
Composants d'une turbine à vapeur, procédé pour refroidir une turbine à vapeur et leur utilisation

(43) Veröffentlichungstag der Anmeldung: 23.11.2005
(73) Patentinhaber: SIEMENS AKTIENGESELLSCHAFT, 80333 München (DE)
(72) Erfinder: Güllenstern, Stefan, Dr., 42719 Solingen (DE); Haje, Detlef, Dr., 46236 Bottrop (DE); Röttger, Dietmar, Dr., 45147 Essen (DE); Truckenmüller, Frank, 45470 Mülheim (DE); de Lazzer, Armin, Dr., 45479 Mülheim (DE)

(56) Entgegenhaltungen:
- DE-B- 1 056 426
- PATENT ABSTRACTS OF JAPAN Bd. 018, Nr. 548 (M-1689), 19. Oktober 1994 (1994-10-19) -& JP 06 193408 A (HITACHI LTD), 12. Juli 1994 (1994-07-12)

## Beschreibung

Die Erfindung betrifft eine Dampfturbinen-Komponente, die eine einen Strömungskanal begrenzende Oberfläche aufweist, wobei der Strömungskanal zur Aufnahme einer Hauptströmung eines fluiden Arbeitsmediums vorgesehen ist, und die ein an ihrer Oberfläche eine Öffnung zum Strömungskanal aufweisendes Kühlsystem zur Aufnahme einer Kühlmediumströmung mit einem Kühlmediumdruck und einer Kühlmediumtemperatur aufweist.

Die Erfindung betrifft des Weiteren ein Verfahren zum Kühlen einer Dampfturbine, wobei der Strömungskanal mit einer Hauptströmung eines fluiden Arbeitsmediums beaufschlagt wird, und das Kühlsystem mit einer Kühlmediumströmung, mit einem Kühlmediumdruck und einer Kühlmediumtemperatur, beaufschlagt wird.

Die Erfindung betrifft auch eine Verwendung.

Unter einer Dampfturbine im Sinne der vorliegenden Anmeldung wird jede Turbine oder Teilturbine verstanden, die von einem Arbeitsmedium in Form von Dampf durchströmt wird. Im Unterschied dazu werden Gasturbinen mit Gas und/oder Luft als Arbeitsmedium durchströmt, das jedoch völlig anderen Temperatur- und Druckbedingungen unterliegt als der Dampf bei einer Dampfturbine. Im Gegensatz zu Gasturbinen weist bei Dampfturbinen z. B. das einer Teilturbine zuströmende Arbeitsmedium mit der höchsten Temperatur gleichzeitig den höchsten Druck auf. Ein offenes Kühlsystem mit einem zum Strömungskanal offenen Kühlsystem ist bei Gasturbinen auch ohne Teilturbinenexterne Zuführung von Kühlmedium realisierbar. Für eine Dampfturbine sollte eine externe Zuführung vorgesehen sein. Der Stand der Technik betreffend Gasturbinen kann schon deswegen nicht für die Beurteilung des vorliegenden Anmeldungsgegenstands herangezogen werden.

Eine Dampfturbinen-Komponente mit einer einen Strömungskanal begrenzenden Oberfläche kann in Form einer Schaufel eines Rotors oder eines Gehäuses, insbesondere eines Eingangsbereiches, gebildet sein.

Eine Dampfturbine umfasst üblicherweise einen mit Schaufeln besetzten drehbar gelagerten Rotor, der innerhalb eines Gehäuses bzw. Gehäusemantels angeordnet ist. Bei Durchströmung des vom Gehäusemantel gebildeten Innenraums des Strömungskanals mit erhitztem und unter Druck stehendem Dampf wird der Rotor über die Schaufeln durch den Dampf in Drehung versetzt. Die Schaufeln des Rotors werden auch als Laufschaufeln bezeichnet. Am Gehäusemantel sind darüber hinaus üblicherweise stationäre Leitschaufeln aufgehängt, welche entlang einer axialen Ausdehnung des Körpers in die Zwischenräume der Rotorschaufeln greifen. Eine Leitschaufel ist üblicherweise an einer ersten Stelle entlang einer Innenseite des Dampfturbinen-Gehäuses gehalten. Dabei ist sie üblicherweise Teil einer Leitschaufelreihe, welche eine Anzahl von Leitschaufeln umfasst, die entlang eines Innenumfangs an der Innenseite des Dampfturbinen-Gehäuses angeordnet sind. Dabei weist jede Leitschaufel mit ihrem Schaufelblatt radial nach innen. Eine Leitschaufelreihe an der genannten ersten Stelle entlang der axialen Ausdehnung wird auch als Leitschaufelgitter oder -kranz bezeichnet. Üblicherweise sind eine Anzahl von Leitschaufelreihen hintereinander geschaltet. Entsprechend ist an einer zweiten Stelle entlang der axialen Ausdehnung hinter der ersten Stelle eine weitere zweite Schaufel entlang der Innenseite des Dampfturbinen-Gehäuses gehalten. Ein Paar einer Leitschaufelreihe und einer Laufschaufelreihe wird auch als Schaufelstufe bezeichnet.

Der Gehäusemantel einer derartigen Dampfturbine kann aus einer Anzahl von Gehäusesegmenten gebildet sein. Unter dem Gehäusemantel der Dampfturbine ist insbesondere das stationäre Gehäusebauteil einer Dampfturbine oder einer Teilturbine zu verstehen, das entlang der Längsrichtung der Dampfturbine einen Innenraum in Form eines Strömungskanals aufweist, der zur Durchströmung mit dem Arbeitsmedium in Form von Dampf vorgesehen ist. Dies kann, je nach Dampfturbinenart, ein Innengehäuse und/oder ein Leitschaufelträger sein. Es kann aber auch ein Turbinengehäuse vorgesehen sein, welches kein Innengehäuse oder keinen Leitschaufelträger aufweist.

Aus Wirkungsgradgründen kann die Auslegung einer derartigen Dampfturbine für so genannte "hohe Dampfparameter", also insbesondere hohe Dampfdrücke und/oder hohe Dampftemperaturen, wünschenswert sein. Allerdings ist insbesondere eine Temperaturerhöhung aus materialtechnischen Gründen nicht unbegrenzt möglich. Um dabei einen sicheren Betrieb der Dampfturbine auch bei besonders hohen Temperaturen zu ermöglichen, kann daher eine Kühlung einzelner Bauteile oder Komponenten wünschenswert sein. Die Bauteile sind nämlich in ihrer Temperaturfestigkeit begrenzt. Ohne effiziente Kühlung würden bei steigenden Temperaturen wesentlich teurere Materialien (z. B. Nickelbasislegierungen) nötig.

Bei den bisher bekannten Kühlmethoden, insbesondere für einen Dampfturbinen-Körper in Form eines Dampfturbinen-Gehäuses oder eines Rotors, ist zwischen einer aktiven Kühlung und einer passiven Kühlung zu unterscheiden. Bei einer aktiven Kühlung wird eine Kühlung durch ein dem Dampfturbinen-Körper separat, d. h. zusätzlich zum Arbeitsmedium zugeführtes Kühlmedium bewirkt. Dagegen erfolgt eine passive Kühlung lediglich durch eine geeignete Führung oder Verwendung des Arbeitsmediums. Bisher wurden Dampfturbinen-Körper vorzugsweise passiv gekühlt.

So ist beispielsweise aus der DE 3421067 C2 bekannt, ein Innengehäuse einer Dampfturbine mit kühlem, bereits expandiertem Dampf zu umströmen. Dies hat jedoch den Nachteil, dass eine Temperaturdifferenz über die Innengehäusewandung beschränkt bleiben muss, da sich sonst bei einer zu großen Temperaturdifferenz das Innengehäuse thermisch zu stark verformen würde. Bei einer Umströmung des Innengehäuses findet zwar eine Wärmeabfuhr statt, jedoch erfolgt die Wärmeabfuhr relativ weit entfernt von der Stelle der Wärmezufuhr. Eine Wärmeabfuhr in unmittelbarer Nähe der Wärmezufuhr ist bisher nicht in ausreichendem Maße verwirklicht worden. Eine weitere passive Kühlung kann mittels einer geeigneten Gestaltung der Expansion des Arbeitsmediums in einer so genannten Diagonalstufe erreicht werden. Hierüber lässt sich allerdings nur eine sehr begrenzte Kühlwirkung für das Gehäuse erzielen.

Eine Schaufelkühlung ist aus der WO 97/08431 bekannt.

In der US 6,102,654 ist eine aktive Kühlung einzelner Komponenten innerhalb eines Dampfturbinen-Gehäuses beschrieben, wobei die Kühlung auf den Einströmbereich des heißen Arbeitsmediums beschränkt ist. Ein Teil des Kühlmediums wird dem Arbeitsmedium beigemischt. Die Kühlung soll dabei durch ein Anströmen der zu kühlenden Komponenten erreicht werden.

Aus der WO 97/49901 und WO 97/49900 ist bekannt, einen einzelnen Leitschaufelkranz zur Abschirmung einzelner Rotorbereiche selektiv durch einen von einem zentralen Hohlraum bespeisten separaten radialen Kanal im Rotor mit einem Medium zu beaufschlagen. Dazu wird das Medium über den Kanal dem Arbeitsmedium beigemischt und der Leitschaufelkranz selektiv angeströmt. Bei der dazu vorgesehenen mittigen Hohlbohrung des Rotors sind jedoch erhöhte Fliehkraftspannungen in Kauf zu nehmen, was einen erheblichen Nachteil in Auslegung und Betrieb darstellt.

Aus den Druckschriften WO 01/46576, DE 196 20 828 C1, WO 97/25521 und DE 34 21 067 C2 ist es bekannt, einer Dampfturbine über deren hohl ausgeführten Rotor ein Kühlmedium zuzuführen und dieses im Bereich einzelner Schaufelfüße austreten zu lassen. Auch dabei wird selektiv nur eine bestimmte Stelle des Rotors gekühlt. Der Nachteil erhöhter Fliehkraftspannungen ist auch bei dieser Lösung vorhanden.

In der EP 1154123 ist eine Möglichkeit der Entnahme und Führung eines Kühlmediums aus anderen Bereichen eines Dampfsystems und die Zuführung des Kühlmediums im Einströmbereich des Arbeitsmediums beschrieben.

Zur Erzielung höherer Wirkungsgrade bei der Stromerzeugung mit fossilen Brennstoffen besteht das Bedürfnis, bei einer Turbine höhere Dampfparameter, d. h. höhere Drücke und Temperaturen als bisher üblich anzuwenden. Bei Hochtemperatur-Dampfturbinen sind beim Dampf als Arbeitsmedium Temperaturen zum Teil weit über 500 °C, insbesondere über 540 °C, vorgesehen. Im Detail sind solche Dampfparameter für Hochtemperatur-Dampfturbinen in dem Artikel "Neue Dampfturbinenkonzepte für höhere Eintrittsparameter und längere Endschaufeln" von H. G. Neft und G. Franconville in der Zeitschrift VGB Kraftwerkstechnik, Nr. 73 (1993), Heft 5, angegeben. Der Offenbarungsgehalt des Artikels wird hiermit in die Beschreibung dieser Anmeldung aufgenommen, um verschiedene Ausführungen einer Hochtemperatur-Dampfturbine anzugeben. Insbesondere sind Beispiele höherer Dampfparameter für Hochtemperatur-Dampfturbinen in Bild 13 des Artikels genannt. In dem genannten Artikel wird zur Verbesserung der Kühlung eines Hochtemperatur-Dampfturbinen-Gehäuses eine Kühldampfzufuhr und Weiterleitung des Kühldampfs durch die erste Leitschaufelreihe vorgeschlagen. Damit wird zwar eine aktive Kühlung bereitgestellt. Diese ist jedoch auf den Hauptströmungsbereich des Arbeitsmediums beschränkt und noch verbesserungswürdig.

Alle bisher bekannten Kühlverfahren für ein Dampfturbinen-Gehäuse sehen also, soweit es sich überhaupt um aktive Kühlverfahren handelt, allenfalls ein gezieltes Anströmen eines separaten und zu kühlenden Turbinenteiles vor und sind auf den Einströmbereich des Arbeitsmediums, allenfalls unter Einbeziehung des ersten Leitschaufelkranzes, beschränkt. Dies kann bei einer Belastung üblicher Dampfturbinen mit höheren Dampfparametern zu einer auf die ganze Turbine wirkenden, erhöhten thermischen Belastung führen, welche durch eine oben beschriebene übliche Kühlung des Gehäuses nur unzureichend abgebaut werden könnte. Dampfturbinen, die zur Erzielung höherer Wirkungsgrade grundsätzlich mit höheren Dampfparametern arbeiten, benötigen eine verbesserte Kühlung, insbesondere des Gehäuses und/oder des Rotors, um eine höhere thermische Belastung der Dampfturbine in genügendem Maße abzubauen. Dabei besteht das Problem, dass bei der Nutzung bisher üblicher Turbinenmaterialien die zunehmende Beanspruchung des Dampfturbinen-Körpers durch erhöhte Dampfparameter, z. B. gemäß dem "Neft"-Artikel, zu einer nachteiligen thermischen Belastung des Körpers führen kann, so dass diese technisch nicht mehr ausführbar sind.

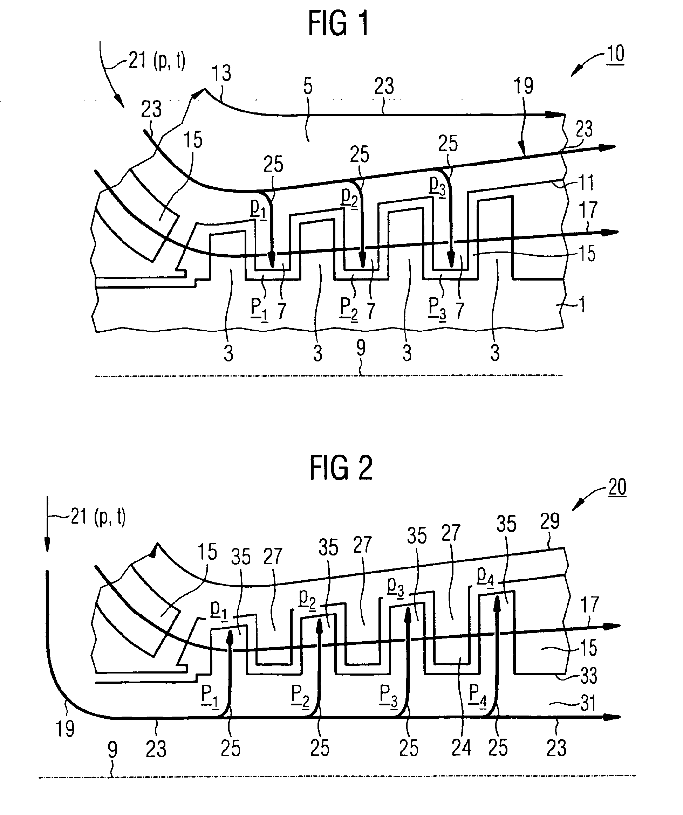

In den nicht veröffentlichten europäischen Patentanmeldungen mit dem amtlichen Anmeldeaktenzeichen 03002472.3 und 03002471.5, jeweils mit Zeitrang vom 05. Februar 2003, sind ein aktiv gekühlter Rotor und ein aktiv gekühltes Gehäuse beschrieben, bei dem ein zum Strömungskanal offenes, im Körper integriertes Kühlsystem zur Aufnahme einer Kühlmediumströmung mit einem Kühlmediumdruck vorgesehen ist. In Bezug auf die Figuren 2 der europäischen Anmeldungen wird erläutert, dass in einem Kühlsystem von Schaufelstufe zu Schaufelstufe das Kühlmedium durch Strömungswiderstände gedrosselt werden kann, wobei sich beispielsweise eine Bohrung als Strömungswiderstand eignet. Bei der Drosselung wird der Druck ohne Verrichtung technischer Arbeit reduziert. Diese Art eines Strömungswiderstandes ist dazu vorgesehen, einen Druck des Kühlmediums gemäß dem Druck eines Arbeitsmediums anzupassen.

In der JP 6193408 wird eine Dampfturbinenkomponente mit Wasser - Einspritz - Ventilen zum Kühlen von thermisch belasteten Dampfturbinen-Bauteilen offenbart.

Soweit die übrigen oben genannten Dokumente überhaupt eine aktive Kühlung offenbaren, erweist sich diese im Einzelnen als nicht ausreichend wirkungsvoll.

Wünschenswert wäre eine effektivere Kühlung bei einer Dampfturbinen-Komponente, insbesondere für eine im Hochtemperatur-bereich betriebene Hochtemperatur-Dampfturbine.

An dieser Stelle setzt die Erfindung an, deren Aufgabe es ist, eine Dampfturbinen-Komponente, ein Verfahren und eine Verwendung anzugeben, gemäß der eine Dampfturbine selbst im Hochtemperatur-Bereich besonders effektiv gekühlt wird.

Hinsichtlich der Dampfturbinen-Komponente wird die Aufgabe mit einer Dampfturbinen-Komponente gemäß Anspruch 1 gelöst.

Der Erfindung liegt die Erkenntnis zugrunde, dass durch eine Anordnung eines Drosselmittels an einer oberflächennahen Drosselstelle eine im Vergleich zur übrigen Kühlmediumtemperatur weitere unmittelbar an der Drosselstelle und zur Oberfläche hin wirksame Temperaturabsenkung des Kühlmediums bewirkt ist.

Die Erfindung geht dabei von der Überlegung aus, dass bei einer aktiven Kühlung die Kühlung durch ein Kühlmedium mit vorgegebener Temperatur, z. B. oberhalb von 500 °C, beispielsweise bei 540 °C oder mehr, erfolgt, wobei eine Kühlmediumtemperatur zweckmäßigerweise unter der Temperatur des Arbeitsmediums liegt, insbesondere an Stellen der Kühlmediumströmung jeweils korrespondierend zu Stellen der Hauptströmung. Dabei ist die Kühlwirkung des Kühlmediums in der Regel dadurch begrenzt, dass allein die Temperaturdifferenz zwischen der Kühlmediumtemperatur des Kühlmediums und der Strömungstemperatur des Arbeitsmediums zur Kühlung des Bauteils wirksam ist. Dabei geht man von der Annahme aus, dass eine Bauteiltemperatur bei Abwesenheit einer Kühlung ganz wesentlich durch die Temperatur des Arbeitsmediums beeinflusst ist oder praktisch etwa auf Höhe der Temperatur des Arbeitsmediums liegt.

Vorzugsweise ist das Kühlsystem in der Komponente integriert. Dabei kann das Kühlsystem, z. B. in Form von Kanälen und/oder Hohlräumen in einem Körper der Komponente selbst gebildet sein. Vorzugsweise kann das Kühlsystem auch durch Abschirmbleche oder -elemente und einen Körper der Komponente gebildet sein, indem die Abschirmbleche beabstandet vom Körper angebracht sind und ein Kühlsystem in Form der durch die Beabstandung gebildeten Kanäle und Hohlräume gebildet ist.

Gemäß dem hier vorgeschlagenen Konzept kann insbesondere darüber hinaus durch die Anordnung des Drosselmittels an einer oberflächennahen Drosselstelle eine Drosslung des Kühlmediums unmittelbar an der Drosselstelle und bis hin zur Oberfläche der Komponente erreicht, so dass zusätzlich zu der oben genannten üblichen Temperaturdifferenz eine weitere Temperaturabsenkung der Kühlmediumtemperatur bewirkt ist und somit im Ergebnis eine im Vergleich zum Stand der Technik größere Temperaturdifferenz zur Kühlung des Arbeitsmediums durch das Kühlmedium bewirkt ist. Der abführbare Wärmestrom aus dem Arbeitsmedium wird dabei durch einen Massenstrom des Kühlmediums und die genannte durch das vorliegende Konzept vergrößerte wirksame Temperaturdifferenz zwischen Kühlmedium und Arbeitsmedium an der Oberfläche der Dampfturbinenkomponente und insbesondere an der Öffnung zum Strömungskanal bestimmt.

Insbesondere ist die Drosselstelle innerhalb einer Wand der Dampfturbinen-Komponente relativ zu einer Mittelfläche der Wand zur Oberfläche hin versetzt angeordnet. Dadurch wird sichergestellt, dass eine bedarfsgerechte Kühlung dort erfolgt, wo der Kühlbedarf besonders hoch ist, nämlich möglichst nahe am Strömungskanal, der zur Aufnahme des heißen Arbeitsmediums vorgesehen ist.

Neben den oben genannten Vorteilen bietet das hier vorgeschlagene Konzept den zusätzlichen Vorteil, dass eine Temperaturabsenkung des Kühlmediums unmittelbar an der Drosselstelle und bis zur Oberfläche der Dampfturbinenkomponente hin erreicht wird. Die maximale Kühlwirkung wird also gezielt an der zu kühlenden Oberfläche erreicht bzw. wird gezielt auf die zu kühlende Oberfläche gelenkt. Außerdem wird eine Aufwärmung des Kühlmediums beim Durchströmen von Kühlkanälen zur Drosselstelle hin gegenüber bisher bekannten Lösungen bei gleicher zur Kühlung zur Verfügung stehenden Temperaturdifferenz reduziert.

Gemäß einer besonders zu bevorzugenden Variante der Erfindung kann die Kühlwirkung dadurch maximiert werden, dass bei wenigstens einem Teil des Kühlmediums ein Phasenwechsel von einem flüssigen Zustand vor der Drosselstelle zu einem dampfförmigen Zustand hinter der Drosselstelle bewirkt ist. Das heißt, beim Durchtritt durch das Drosselmittel findet ein Phasenübergang statt, so dass in dem vorliegenden Fall von einer Verdampfungskühlung gesprochen werden kann. In diesem Fall kommt zusätzlich zu der gemäß dem vorgeschlagenen Konzept erhöhten zur Kühlung zur Verfügung stehenden Temperaturdifferenz auch noch die Verdampfungsenthalpie zur Wärmeabfuhr aus dem Arbeitsmedium zum Tragen. Die so abführbare Wärmemenge ist je nach Druckniveau, d. h. je nach dem vorliegenden Kühlmediumdruck in der Kühlmediumströmung, um ein mehrfaches größer als die durch eine reine Drosselung erreichbare Wärmemenge. Aufgrund eines Wärmeflusses aus dem die Drosselstelle umgebenden Turbinenmaterial der Dampfturbinen-Komponente heraus in die Drosselstelle hinein - also von heiß nach kalt - erfolgt eine drastische Entspannung, und dem folgend eine Verdampfung des Kühlmediums, wobei in diesem oberflächennahen Bereich der Drosselstelle, d. h. zwischen der Drosselstelle und der Öffnung zum Strömungskanal, eine Verdampfungsenthalpie vom Kühlmedium aufgenommen wird. Diese zusätzlich aufgenommene Verdampfungsenthalpie bewirkt den beschriebenen erhöhten Kühleffekt in Folge der gezielten Anordnung des über seine Funktion beschriebenen Drosselmittels an der oberflächennahen Drosselstelle.

Vorteilhafte Weiterbildungen der Erfindung sind den Unteransprüchen zu entnehmen und geben im Einzelnen vorteilhafte Möglichkeiten an, insbesondere das Kühlsystem und das Drosselmittel zu realisieren.

Grundsätzlich kann eine jede an den Strömungskanal grenzende und damit eine den Strömungskanal begrenzende Oberfläche einer Dampfturbinenkomponente gemäß dem neuen Konzept vorteilhaft gekühlt werden. Insbesondere kommen als zu kühlende Komponenten eine Dampfturbinenschaufel in Frage und darüber hinaus jede Komponente, die eine Anzahl von, mehrere Schaufeln aufweisende, in Längsrichtung hintereinander angeordnete Schaufelstufen trägt, die sich jeweils in den Strömungskanal erstrecken. Dies ist insbesondere ein Dampfturbinen-Rotor oder ein Dampfturbinen-Gehäuse.

Das Kühlsystem lässt sich im Rahmen vorteilhafter Weiterbildungen zweckmäßigerweise so auslegen, dass es insgesamt möglichst nahe am Strömungskanal angeordnet ist.

Insbesondere im Falle eines oben genannten Dampfturbinenrotors oder eines Dampfturbinen-Gehäuses erstreckt sich der Hauptkühlkanal über eine Ausdehnung wenigstens einer Schaufelreihe.

Darüber hinaus weist der Zweigkühlkanal zweckmäßigerweise einen eine Schaufelreihe umgebenden Ringkanal auf.

Als ebenfalls zweckmäßig hat es sich erwiesen, dass der Zweigkühlkanal eine oder mehrere von einem Ringkanal ausgehende Schaufelkanäle aufweist, die in wenigstens eine Schaufelstufe führen. Das heißt, zweckmäßigerweise ist eine Anzahl von Schaufelkanälen vorgesehen, die vorzugsweise in alle Schaufeln einer Schaufelstufe führen. Vorzugsweise ist wenigstens pro Schaufel ein Schaufelkanal vorgesehen.

Ein Zweigkühlkanal verläuft vorzugsweise quer zur Längsrichtung, d. h. in einer Radialrichtung der Komponente. Das heißt, ein Zweigkühlkanal verläuft vorzugsweise quer zu einer Hauptströmung des fluiden Arbeitsmediums. Das gleiche gilt für einen Schaufelkanal.

Insbesondere der Einströmbereich einer Dampfturbine lässt sich auf diese Weise vorteilhaft kühlen. Das heißt, das oben beschriebene Kühlsystem ist bevorzugtermaßen im Einströmbereich einer Dampfturbine, also im Einströmbereich eines Gehäuses und/oder eines Rotors bzw. in den ersten Schaufelstufen, die einem Einströmbereich am nächsten liegen, angeordnet.

Im Rahmen zusätzlicher Weiterbildungen der Erfindung lässt sich das Drosselmittel besonders vorteilhaft anordnen und/oder ausgestalten.

Vorzugsweise ist das Drosselmittel an einer oberflächennahen Drosselstelle in einem Hauptkühlkanal angeordnet. Im Bereich der Drosselstelle kann der Hauptkühlkanal dazu zur Oberfläche hin geführt sein, um eine oberflächennahe Anordnung der Drosselstelle zu ermöglichen.

Darüber hinaus lässt sich das Drosselmittel besonders vorteilhaft an einer oberflächennahen Drosselstelle in einem Zweigkühlkanal anordnen. Die oben erläuterte Abstaffelung eines Kühlsystems in Hauptkühlkanal und Zweigkühlkanal lässt sich sowohl hinsichtlich einer Turbinenschaufel als auch hinsichtlich eines Rotors oder eines Gehäuses realisieren.

Im Falle eines Rotors oder eines Gehäuses ist das Drosselmittel besonders vorteilhaft an einer oberflächennahen Drosselstelle in einem Ringkanal angeordnet. Darüber hinaus erweist es sich als zweckmäßig, das Drosselmittel an einer oberflächennahen Drosselstelle in einem Schaufelkanal anzuordnen.

Das Drosselmittel kann grundsätzlich auf unterschiedliche Weise zur Erfüllung seiner gemäß dem vorgeschlagenen Konzept ausgeführten Funktion aufgebaut werden.

Als überaus zweckmäßig hat es sich erwiesen, dass das Drosselmittel eine geometrisch feste Form aufweist. Es hat sich nämlich gezeigt, dass aufgrund der nach Herstellung geometrisch fest vorgegebenen Drosselung des Haupt-, Zweig-, Ring- und/oder Schaufelkühlkanals ein Kühlmediumdruck und eine Kühlmediumtemperatur besonders gezielt eingestellt werden können. Üblicherweise sind nämlich Dampfturbinen im Rahmen bestimmter Druck- und Temperaturparameter, insbesondere der oben genannten Hochtemperatur-Parameter, betrieben. Damit sind üblicherweise entlang der Längsrichtung des Strömungskanals ein Strömungsdruck und eine Strömungstemperatur des Arbeitsmediums bekannt und vorgegeben. Um eine besonders vorteilhafte Kühlung zur Verfügung zu stellen wird also die geometrische Form des Drosselmittels an der einen oder der Mehrzahl von Drosselstellen entlang der Längsrichtung des Strömungskanals so ausgelegt, dass das Kühlmedium eine zur Kühlung besonders vorteilhafte Kühlwirkung aufweist. Die Kühlwirkung ist vor allem gekennzeichnet durch eine Differenztemperatur des Kühlmediums zum Arbeitsmedium und insbesondere zum zu kühlenden Bauteil und gekennzeichnet durch einen Kühlmassenstrom.

In Folge der Drosselung des Kühlmediums kann eine Abkühlung des Kühlmediums im Rahmen einer Temperaturabsenkung von vorzugsweise mindestens 10 K bis zum Teil 100 K erfolgen. Insbesondere kann eine Abkühlung des Kühlmediums zwischen 20 K und 75 K liegen. Je nach Kühlmediumtemperatur kann die Temperaturabsenkung entlang der Längsrichtung variieren.

Vorzugsweise ist das Drosselmittel in Form der Öffnung des Kühlsystems gebildet. Die Öffnung lässt sich nämlich besonders einfach in Form einer gezielten geometrischen Einengung und damit als eine gezielte lokale Querschnittsverengung der lichten Weite des Kühlsystems bilden. Das heißt, die Querschnittsverengung kann direkt an der Oberfläche der Dampfturbinen-Komponente erfolgen.

Alternativ oder zusätzlich kann das Drosselmittel in einem Bereich vor der Oberfläche in einem Kühlkanal angeordnet sein. Dabei erweist sich insbesondere die Form einer Taillierung des Kühlkanals und/oder der Öffnung des Kühlsystems als vorteilhaft.

In einer zusätzlichen oder alternativen Weiterbildung der Erfindung kann das Drosselmittel in Form eines oberflächenvergrößernd wirkenden, halbdurchlässigen Stopfens in einem Kühlkanal und/oder der Öffnung des Kühlsystems gebildet sein. Bei dieser Art der Weiterbildung zur Drosselung eignet sich insbesondere Keramik oder eine Metall- bzw. Stahlstruktur, z. B. ein Drahtgeflecht oder dergleichen, als besonders zweckmäßiges Stopfenmaterial.

In einer weiteren zusätzlichen oder alternativen Weiterbildung der Erfindung kann das Drosselmittel in Form einer oberflächenvergrößernd wirkenden, halbdurchlässigen Verkleidung auf der Oberfläche der Komponente im Bereich der Öffnung zum Strömungskanal gebildet sein.

Die Verkleidung kann dabei zweckmäßigerweise in Form eines Bleches mit enger Maschenweite und/oder darunter liegendem porösen Material, z. B. in Form einer Keramik oder in einer der oben erläuterten Formen, gebildet sein. Das Blech kann dabei mit Löchern oder Spalten versehen sein sowie maschenartig ausgebildet sein. Bei dieser Weiterbildung deckt die Verkleidung besonders zweckmäßig auch die in die Oberfläche des zu kühlenden Bauteils einmündenden Kühlkanäle des Kühlsystems ab. Das Kühlmedium tritt in diesem Fall aus dem Kühlsystem über bzw. durch die Verkleidung in den das Arbeitsmedium führenden Strömungskanal ein. Aufgrund des erläuterten Durchtritts des Kühlmediums durch die Verkleidung erfolgt wiederum die gemäß dem oben erläuterten Konzept beschriebene Drosselung mit dem Effekt, dass die zusätzliche Temperaturabsenkung und insbesondere eine frei werdende Verdampfungsenthalpie den Kühleffekt verbessert.

Die vorliegende Erfindung führt des Weiteren auf eine Dampfturbine, insbesondere auf eine Hochtemperatur-Dampfturbine mit einer Dampfturbinenkomponente, wie sie oben beschrieben ist. Im Falle einer Hochtemperatur-Dampfturbine kann diese insbesondere dadurch definiert sein, dass sie mit einem Arbeitsmedium gemäß der in dem "Neft"-Artikel erläuterten Druck- und Temperaturparameter beaufschlagt wird.

Betreffend das Verfahren wird die Aufgabe durch die Erfindung mit einem Verfahren der eingangs genannten Art gelöst, bei dem erfindungsgemäß mit wenigstens einem Strömungswiderstand in Form eines Drosselmittels an einer Drosselstelle im Kühlsystem, in Strömungsrichtung des Kühlmediums ein Druckabfall des Kühlmediumsdruckes über die Drosselstelle eingestellt wird, und an der Drosselstelle eine Temperaturabdeckung der Kühlmediumtemperatur bewirkt wird.

Ein Kühlverfahren in dieser Form ermöglicht nämlich die wie oben beschriebene effiziente Kühlung insbesondere einer Hochtemperatur-Dampfturbine. Die Wirkung des Drosselmittels ist besonders effektiv, wenn dieses an einer oberflächennahen Drosselstelle angeordnet wird.

Vorteilhafte Weiterbildungen der Erfindung sind den Verfahrensunteransprüchen zu entnehmen und geben im Einzelnen vorteilhafte Möglichkeiten an, das Verfahren im Rahmen der Aufgabe zu realisieren.

Vorzugsweise wird für wenigstens einen Teil des Kühlmediums ein Phasenwechsel von einem flüssigen Zustand vor der Drosselstelle zu einem dampfförmigen Zustand hinter der Drosselstelle bewirkt. Auf diese Weise lässt sich zusätzlich zu der oben genannten Temperaturabsenkung auch die Verdampfungsenthalpie zur Kühlung des Arbeitsmediums durch das Kühlmedium nutzen.

Des Weiteren sieht das Verfahren im Rahmen einer besonders bevorzugten Weiterbildung vor, dass der Kühlmediumdruck im Kühlsystem mit wenigstens einem weiteren Strömungswiderstand über einem Strömungsdruck der Hauptströmung gehalten wird. Der weitere Strömungswiderstand ist vorliegend vom Drosselmittel zu unterscheiden und ist aufgrund seiner anderen Funktion im Unterschied zum Drosselmittel ausgelegt. Vorzugsweise lässt sich der weitere Strömungswiderstand in Form einer flexiblen Widerstandseinrichtung realisieren, die keine geometrisch fest vorgegebene Form hat. Infrage kommt bei dieser Weiterbildung beispielsweise ein gemäß der Kühlmediumströmung ausgelegtes Strömungswiderstands-Ventil, dessen Öffnungs- und Durchlassverhalten den Strömungsdruck des Arbeitsmediums und den Kühlmediumdruck der Kühlmediumströmung berücksichtigt.

Betreffend die Verwendung wird die Aufgabe durch die Erfindung mittels einer Verwendung eines Drosselmittels an einer oberflächennahen Drosselstelle als Strömungswiderstand im Kühlsystem einer Dampfturbine gemäß der oben erläuterten Formen gelöst, um bei Betrieb der Dampfturbine in Strömungsrichtung des Kühlmediums einen Druckabfall des Kühlmediumdruckes über die Drosselstelle derart einzustellen, dass an der Drosselstelle eine Temperaturabsenkung der Kühlmediumtemperatur bewirkt wird.

Insbesondere ist dabei vorgesehen, dass für wenigstens einen Teil des Kühlmediums ein Phasenwechsel von einem flüssigen Zustand vor der Drosselstelle zu einem dampfförmigen Zustand hinter der Drosselstelle bewirkt wird.

Ausführungsbeispiele der Erfindung werden nachfolgend anhand der Zeichnung beschrieben. Diese soll die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Im Einzelnen zeigt die Zeichnung in:
- FIG 1: ein Dampfturbinen-Gehäuse als bevorzugte Ausführungsform einer Dampfturbinen-Komponente bei einer Hochtemperatur-Dampfturbine;
- FIG 2: einen Dampfturbinen-Rotor als bevorzugte Ausführungsform einer Dampfturbinen-Komponente bei einer Hochtemperatur-Dampfturbine;
- FIG 3: beispielhafte Zustandsänderungen des Kühlmediums in einem h/s-Diagramm, wobei Zustandsänderungen gemäß einer bevorzugten Ausführungsform im Vergleich zum Stand der Technik nebeneinander gestellt sind;
- FIG 4: eine bevorzugte Ausführungsform einer Dampfturbinen-Komponente in Form einer Dampfturbinen-Schaufel;
- FIG 5: ein Drosselmittel in Form einer halbdurchlässigen Verkleidung im Bereich der Öffnung zum Strömungskanal auf der Oberfläche einer bevorzugten Ausführungsform einer Dampfturbinen-Komponente in Form eines Dampfturbinen-Gehäuses oder eines Dampfturbinen-Rotors;
- FIG 6: ein anderes Drosselmittel in Form einer Taillierung der Öffnung eines Kühlkanals bei einer bevorzugten Ausführungsform einer Dampfturbinen-Komponente;
- FIG 7: ein anderes Drosselmittel in Form einer Verengung eines Zweigkühlkanals an der Stelle der Abzweigung von einem Hauptkühlkanal;
- FIG 8: ein anderes Drosselmittel in Form eines halbdurchlässigen Stopfens in der Öffnung eines Kühlkanals bei einer bevorzugten Ausführungsform einer Dampfturbinen-Komponente.

FIG 1 zeigt eine Hochtemperatur-Dampfturbine 10 gemäß einer besonders bevorzugten Ausführungsform einer Dampfturbinen-Komponente. Sie kann mit einem Arbeitsmedium in Form einer Hauptströmung 17 mit Parametern für Druck p, z. B. bei 250 bar, und einer Temperatur t oberhalb von 540 °C, oder z. B. gemäß dem "Neft"-Artikel, beaufschlagt werden. Die Dampfturbine 10 weist einen Rotor 1 mit einer Anzahl von daran angebrachten Rotor- oder Laufschaufeln auf, die in so genannten Laufschaufelreihen 3 hintereinander angeordnet sind. Die Laufschaufelreihen 3 sind drehbar in einem Gehäuse 5, das eine Anzahl von Leitschaufelreihen 7 aufweist und sich dabei entlang einer axialen Ausdehnung entlang einer Achse, also in Längsrichtung 9 erstreckt. Die drehbaren Laufschaufelreihen 3 greifen dabei wie Finger in Zwischenräume zwischen die stationären Leitschaufelreihen 7.

Vorliegend ist das Dampfturbinen-Gehäuse 5 als besonders bevorzugte Ausführungsform einer Dampfturbinen-Komponente gemäß dem Konzept der Erfindung ausgeführt. Das Gehäuse 5 könnte auch als ein Innengehäuse oder als ein Leitschaufelträger ausgebildet sein und/oder in der Art einer segmentierten Bauweise von einer Anzahl von Gehäusesegmenten gebildet sein. Das Gehäuse 5 weist eine Innenwandung 11 und eine Außenwandung 13 auf. Mit der Innenwandung begrenzt das Gehäuse 5 einen Strömungskanal 15, der zur Aufnahme einer Hauptströmung 17 eines fluiden Arbeitsmediums vorgesehen ist. Das Arbeitsmedium weist dabei entlang der Längsrichtung einen sich ändernden Strömungsdruck und eine sich ändernde Strömungstemperatur auf. Die in Längsrichtung hintereinander angeordneten Leitschaufelreihen 7 erstrecken sich jeweils in den Strömungskanal 15. Das Gehäuse 5 weist ein zum Strömungskanal 15 offenes im Gehäuse 5 integriertes Kühlsystem 19 zur Aufnahme einer Kühlmediumströmung mit einem Kühlmediumdruck und einer Kühlmediumtemperatur auf.

Der Kühlmediumdruck ist bei dem hier erläuterten Beispiel durch die in ihrer Höhe in Folge abnehmenden Drücke p₁>p₂>p₃ gekennzeichnet. Ebenso ist der Strömungsdruck bei dem hier erläuterten Beispiel durch die in ihrer Folge abnehmenden Drücke P₁>P₂>P₃ gekennzeichnet. Abnehmende Drücke des Kühlmediums und der Hauptströmung liegen jedoch nicht notwendigerweise bei jedem Betriebszustand vor und die Drücke können sich bei anderen Beispielen anders verhalten. Beispielsweise können sich bei einem schlechteren, aber dennoch möglichen Beispiel die Drücke der Hauptströmung im Grenzfall praktisch gleich verhalten (P₁ = P₂ = P₃). Dies würde z. B. einem Schwachlast- oder Leerlaufbetrieb einer Turbine entsprechen. Die Drücke des Kühlmediums könnten sich bei einem schlechteren Beispiel im Grenzfall sogar wie p₁<p₂<p₃ verhalten. Ähnliches kann für die Temperaturen des Kühlmediums gelten, was weiter unten noch erläutert wird. Das in FIG 1 gezeigte Kühlsystem 19 weist einen Hauptkanal 23 auf, der sich in Längsrichtung 9 über alle Schaufelreihen 3, 7 erstreckt. Im Übrigen weist das Kühlsystem auch pro Leitschaufelreihe 7 einen Zweigkühlkanal 25 auf, der vom Hauptkühlkanal 23 abzweigt und zum Strömungskanal 15 hin offen ist. Dazu weist das Gehäuse oder eine oder mehrere Schaufeln an seiner/ihren Oberfläche/n eine Öffnung zum Strömungskanal auf.

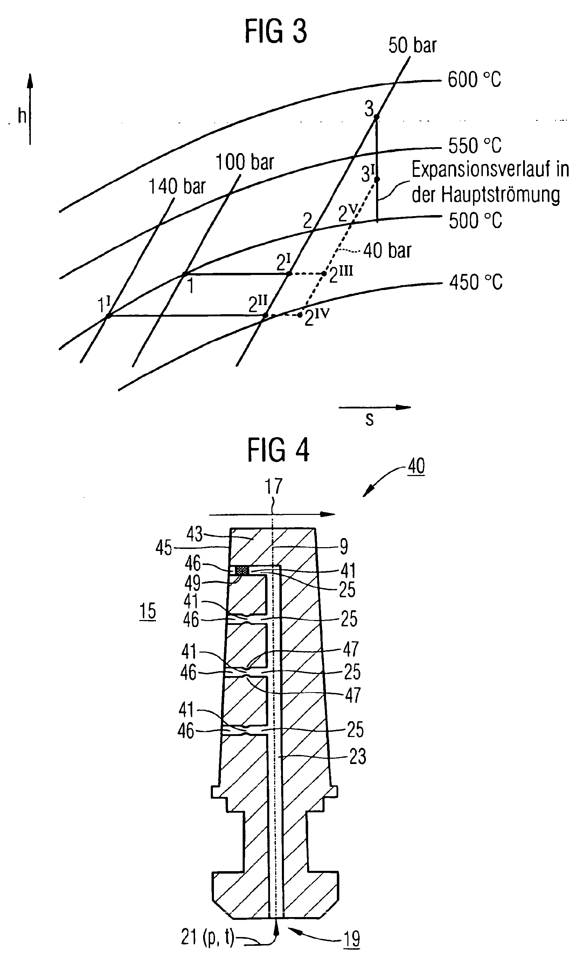

Insbesondere weist das Kühlsystem 19 wenigstens einen in Bezug auf die FIG 3 bis 7 im Einzelnen erläuterten Strömungswiderstand in Form eines Drosselmittels an einer oberflächennahen Drosselstelle auf, das in Strömungsrichtung des Kühlmediums ein Druckabfall des Kühlmediumdruckes über die Drosselstelle derart einstellt, dass an der Drosselstelle eine Temperaturabsenkung der Kühlmediumtemperatur bewirkt ist. Bei den in Zusammenhang mit den Figuren erläuterten Ausführungsformen wird sogar bei wenigstens einem Teil des Kühlmediums ein Phasenwechsel von einem flüssigen Zustand vor der Drosselstelle zu einem dampfförmigen Zustand hinter der Drosselstelle bewirkt.

FIG 2 zeigt eine weitere besonders bevorzugte Ausführungsform einer Hochtemperatur-Dampfturbine 20, die mit Dampf als Arbeitsmedium bei einem Druck oberhalb von 250 bar und einer Temperatur oberhalb von 540 °C beaufschlagt wird oder in Abwandlungen gemäß Parametern in dem "Neft"-Artikel.

In der FIG 2 sind Merkmale gleicher Funktion mit den gleichen Bezugszeichen wie in FIG 1 benannt, auch wenn sie im Einzelnen bei der Ausführungsform der FIG 2 im Unterschied zur Ausführungsform der FIG 1 unterschiedlich ausgeführt sind. Dies betrifft insbesondere das Kühlsystem 19 mit dem Hauptkühlkanal 23 und den Zweigkühlkanälen 25.

Das Kühlsystem 19 ist gemäß der Ausführungsform der FIG 2 in einem Rotor 31 als besondere Ausführungsform einer Dampfturbinen-Komponente integriert und übernimmt im Wesentlichen die gleichen Funktionen wie das in Bezug auf die FIG 1 erläuterte Kühlsystem. Dementsprechend gelten auch bei dieser Ausführungsform die für die Drücke p₁>p₂>p₃ sowie P₁>P₂>P₃ erläuterten Verhältnisse, auch wenn diese Drücke nunmehr an unterschiedlicher Stelle auftreten.

Ähnlich wie die Drücke p und P verhalten sich in der Regel auch die Temperaturen t des Kühlmediums und T des Arbeitsmediums. Das heißt, jedem Druck p ist eine entsprechende Temperatur t und jedem Druck P ist eine entsprechende Temperatur T zugeordnet. Auch für die Temperaturen gilt bei diesem Beispiel t₁>t₂>t₃ und T₁>T₂>T₃.

Vorliegend begrenzt der Rotor 31 mit seiner Außenwandung 33 den Strömungskanal 15. Allerdings sind diesmal die Laufschaufelreihen 35 im Unterschied zu den Laufschaufelreihen 3 der FIG 1 mit dem Kühlsystem 19, und dabei insbesondere mit den Zweigkühlkanälen 25 ausgelegt. Im Übrigen weisen im Unterschied zu der FIG 1 vorliegend die Leitschaufelreihen 27 des Gehäuses 29 keine Kühlkanäle auf.

Auch wenn in der Ausführungsform der FIG 1 lediglich das Dampfturbinengehäuse als besonders bevorzugte Ausführungsform einer Dampfturbinen-Komponente ausgelegt ist und in der Ausführungsform der FIG 2 lediglich der Dampfturbinenrotor als besonders bevorzugte Ausführungsform der Dampfturbinen-Komponente ausgelegt ist, so kann dennoch in einer weiteren hier nicht gezeigten Ausführungsform einer Hochtemperatur-Dampfturbine ein Dampfturbinengehäuse und ein Dampfturbinenrotor gleichermaßen ein Kühlsystem 19 wie jeweils in den FIG 1 und 2 gezeigt aufweisen.

Darüber hinaus kann ein entsprechend ausgebildetes Kühlsystem auch in einer Turbinenschaufel angebracht sein, wie sie beispielsweise in der FIG 4 gezeigt ist. Dies kann eine Leitschaufel der Leitschaufelreihe 7 oder auch eine Laufschaufel der Laufschaufelreihe 3 sein.

In Bezug auf solche und ähnliche Dampfturbinen-Komponenten wird in Strömungsrichtung des Kühlmediums ein Druckabfall des Kühlmediumdruckes p über die Drosselstelle eingestellt und an der Drosselstelle eine Temperaturabsenkung der Kühlmediumtemperatur p bewirkt, wie sie beispielhaft im h/s-Diagramm der FIG 3 dargestellt ist.

Bei einer aktiven Kühlung nach dem Stand der Technik erfolgt die Kühlung durch ein Kühlmedium mit beispielsweise bei 500 °C vorgegebener Temperatur t, welche unter der jeweiligen Temperatur T des Arbeitsmediums im Strömungskanal 15 liegt. Dabei ist die Kühlwirkung auf die Temperaturdifferenz zwischen der Kühlmediumtemperatur t und der Strömungstemperatur T begrenzt. Im h/s-Diagramm ist die Wärmeaufnahme des Kühlmediums durch die isobare Zustandsänderung von der Ziffer 2 zu der Ziffer 3 gegeben und durch eine Temperaturdifferenz gemäß dem dargestellten Beispiel in Höhe von 75 K gekennzeichnet.

Im Unterschied dazu erfolgt bei dem hier vorgeschlagenen Konzept durch Einbringen eines Drosselmittels eine Drosselung des Kühlmediums im Bereich der Drosselstelle, was sich zu der Oberfläche der Dampfturbinen-Komponente fortsetzt. Auf diese Weise wird also eine weitere unmittelbar an der Kühlstelle wirksame Temperaturabsenkung erzielt.

Im h/s-Diagramm ist dies durch die Zustandsänderungen mit der Ziffer 1 zur Ziffer 2^{I} zur Ziffer 3 dargestellt. Bei dem gezeigten Beispiel ergibt sich bei Zufuhr des Kühlmediums mit einem Druck p von 100 bar eine wirksame Temperaturdifferenz von etwa 100 K. Durch den mit dem Drosselmittel erzielten Druckabfall lässt sich die Temperaturdifferenz zwischen der Kühlmediumtemperatur t und der Arbeitsmediumtemperatur T also gezielt vergrößern. Dies erfolgt vorteilhaft ohne die Geometrie eines Drosselmittels zu ändern. Da das Drosselmittel turbinenintern angebracht ist, ist es insbesondere auch für Einstellmaßnahmen unzugänglich. Das vorliegende Konzept ermöglicht aber eine vorteilhafte Abstimmung aller Drosselmittel aufeinander und in Bezug auf die Parameter p, t des Kühlmediums und die Parameter P, T des Arbeitsmediums.

Bei dem hier erläuterten Beispiel der FIG 3 ergibt sich bei einem Kühlmediumdruck p von 140 bar über die Zustandsänderungen der Ziffer 1^{I} zur Ziffer 2^{II} zur Ziffer 3 eine Temperaturdifferenz zwischen Kühlmediumtemperatur t und Arbeitsmediumtemperatur T in Höhe von 120 K, die zur Kühlung genutzt werden kann. Gemäß der üblichen Maßnahme im Stand der Technik wäre, wie oben erläutert, im Rahmen der Zustandsänderung der Ziffer 2 zur Ziffer 3 lediglich eine Temperaturdifferenz von 75 K erzielbar.

Unabhängig von den Maßnahmen des hier vorgestellten Konzeptes kann selbstverständlich außerdem die Kühlmediumtemperatur des Kühlmediums als solche variiert werden. Dies erweist sich jedoch als eine vergleichsweise aufwendigere und langsamere Maßnahme. Dennoch könnte darüber auch die Kühlwirkung abhängig von den Kühlanforderungen, welche bei einer Dampfturbine unter anderem lastabhängig sind, gezielt beeinflusst werden.

In dem h/s-Diagramm der FIG 3 ist darüber hinaus eine Zustandsänderung bei einer zweiten Kühlstelle gezeigt, welche stromab der Kühlstelle liegt, für die die oben erläuterten Beispiele gezeigt sind. Eine Zustandsänderung bei der zweiten Kühlstelle führt auf den Zustand mit der Ziffer 3^{I} - im Vergleich zu dem oben erläuterten Zustand mit der Ziffer 3. Kennzeichnend für die zweite Kühlstelle ist, dass bei ihr die Expansion des Arbeitsmediums und des Kühlmediums weiter fortgeschritten ist. Bei der zweiten Kühlstelle liegt also ein geringerer Druck vor. Gemäß dem Stand der Technik müsste man mit einer durch die Zustandsänderung von der Ziffer 2^{V} zur Ziffer 3^{I} ausgehen und sich mit einer Temperaturdifferenz von 35 K, z. B. bei einem Kühlmedium von 500 °C, begnügen. Gemäß dem hier vorgelegt Konzept lässt sich dennoch mit dem gleichen Kühlmedium, das eine Kühlmediumtemperatur von 500 °C aufweist, an der Drosselstelle eine Temperaturabsenkung der Kühlmediumtemperatur t bewirken. So ließe sich über die Zustandsänderung gemäß der Ziffern 1, 2^{III}, 3^{I} eine Temperaturdifferenz von 65 K nutzen. An der Drosselstelle erfolgt also eine Temperaturabsenkung von 30 K. Über die Zustandsänderung mit den Ziffern 1^{I}, 2^{IV}, 3^{I} lässt sich eine Temperaturdifferenz von 85 K zur Kühlung des Arbeitsmediums nutzen. An der Drosselstelle erfolgt also eine Temperaturabsenkung der Kühlmediumtemperatur t um 50 K.

Im Grundsatz lässt sich der abführbare Wärmestrom darüber hinaus natürlich auch durch den Massenstrom des Kühlmediums bestimmen. Daneben ist jedoch die wirksame Differenztemperatur bestimmend, die gemäß dem hier vorgestellten neuen Konzept dadurch vorteilhaft vergrößert wird, dass an der Drosselstelle eine zusätzliche Temperaturabsenkung der Kühlmediumtemperatur t bewirkt ist.

Die Ausführung und der Durchflussquerschnitt der Strömungswiderstandselemente, die in den FIG 4 bis FIG 7 näher erläutert sind, werden vorteilhafterweise entsprechend der erforderlichen Wärmeabfuhr an den jeweiligen Kühlorten entlang der Längsrichtung der Dampfturbinen-Komponente festgelegt.

FIG 4 zeigt eine Dampfturbinen-Schaufel 40 als eine bevorzugte Ausführungsform einer Dampfturbinen-Komponente, bei der ein Kühlsystem 19 einen Hauptkühlkanal 23 aufweist, der sich in Längsrichtung 9 der Dampfturbinen-Schaufel 40 erstreckt. Das Kühlsystem 19 weist außerdem einen Zweigkühlkanal 25 auf, der vom Hauptkühlkanal 23 abzweigt und zum Strömungskanal 15 hin über eine Öffnung 46 offen ist. Der Strömungskanal 15 ist zur Aufnahme einer Hauptströmung 17 eines fluiden Arbeitsmediums vorgesehen.

Das Kühlsystem 19 dient zur Aufnahme einer Kühlmediumströmung 21, wobei die Kühlmediumströmung 21 durch einen Kühlmediumdruck p und eine Kühlmediumtemperatur t als Kühlmediumparameter gekennzeichnet ist.

Jeder der Zweigkühlkanäle 25 weist einen Strömungswiderstand in Form eines Drosselmittels an einer oberflächennahen Drosselstelle 41 auf. Vorliegend ist die Drosselstelle 41 innerhalb einer Wand 43 der Dampfturbinen-Schaufel 40 relativ zu einer Mittelfläche der Wand, vorliegend in Form der Längsrichtung 9, zur Oberfläche 45 hin versetzt angeordnet.

An der Drosselstelle 41 weist der Zweigkühlkanal 25 ein Drosselmittel auf, welches vorliegend auf unterschiedliche Weise ausgebildet ist. Bei den unteren drei Drosselstellen 41 ist das Drosselmittel in Form einer Taillierung 47 des Kühlkanals 25 gebildet. Beim obersten Zweigkühlkanal 25 ist das Drosselmittel in Form eines oberflächenvergrößernd wirkenden, halbdurchlässigen Stopfens 49 gebildet. Bei der Taillierung 47 handelt es sich also um eine Querschnittsverengung des Zweigkühlkanals 25 in Form einer gezielten geometrischen Einengung der lichten Weite des Zweigkühlkanals 25.

Beim oberflächenvergrößernd wirkenden, halbdurchlässigen Stopfen 49 handelt es sich vorliegend um ein poröses Material, das vorteilhaft eine Keramik oder eine Metall- bzw. Stahlstruktur, z. B. ein Drahtgeflecht oder dergleichen, sein kann. Durch die derart ausgestalteten Drosselmittel 47, 49 an einer oberflächennahen Drosselstelle 41 der Dampfturbinen-Schaufel 40 wird beim Kühlmedium 21 eine Temperaturabsenkung der Kühlmediumtemperatur t bewirkt und auf diese Weise wird für wenigstens einen Teil des Kühlmediums ein Phasenwechsel von einem flüssigen Zustand vor der Drosselstelle 41 zu einem dampfförmigen Zustand hinter der Drosselstelle 41 bewirkt. Auf diese Weise wird die Verdampfungsenthalpie des Kühlmediums 21 in direkter Umgebung der zu kühlenden Oberfläche 45 der Dampfturbinenschaufel 40 zur Kühlung genutzt.

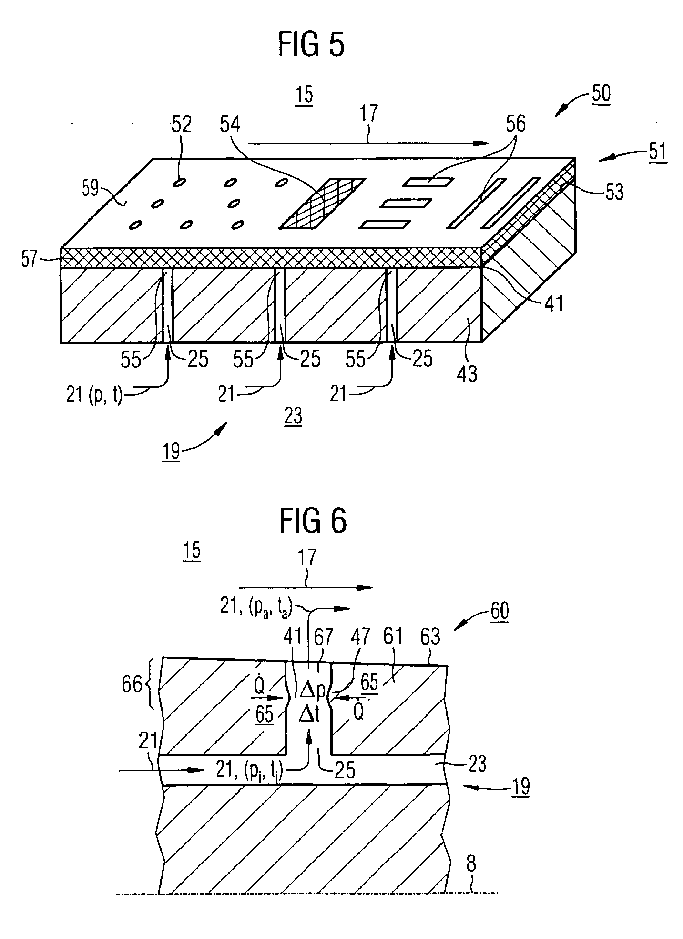

FIG 5 zeigt eine Dampfturbinen-Komponente, die zum Beispiel einen eingangsseitigen Teil eines Dampfturbinen-Gehäuses 50 darstellen kann. Ein Kühlsystem 19 weist einen Hauptkühlkanal 23 und Zweigkühlkanäle 25 zur Aufnahme eines Kühlmediums 21 auf, wobei das Kühlmedium durch eine Kühlmediumtemperatur t und einen Kühlmediumdruck p gekennzeichnet ist. Das in FIG 5 dargestellte Teil könnte gleichermaßen auch ein eingangsseitiges Rotorteil darstellen. An einer oberflächennahen Drosselstelle 41 ist bei der vorliegenden Ausführungsform ein Drosselmittel in Form einer oberflächenvergrößernd wirkenden, halbdurchlässigen Verkleidung auf der Oberfläche 53 des Gehäuseteils 50 im Bereich einer Öffnung 55 des Zweigkühlkanals 25 gebildet. Die Verkleidung 51 ist dabei auf der einen Strömungskanal 15 begrenzenden Oberfläche 53 aufgesetzt, wobei der Strömungskanal 15 zur Aufnahme einer Hauptströmung 17 eines fluiden Arbeitsmediums vorgesehen ist.

Die Verkleidung ist vorliegend zweischichtig aufgeführt. Eine erste Schicht 57 ist mit einem porösen Material, vorliegend in Form einer Keramik, gebildet. Die zweite Schicht 59 ist in Form eines Deckbleches gebildet. Das Deckblech weist zum Durchlass von Kühlmedium hier beispielhaft dargestellte Öffnungen auf. Die Öffnungen können wie vorliegend gezeigt in Form von Bohrungen 52, einer Netzstruktur 54 oder in Form von Spalten 56 in beliebiger Anordnung und Kombination gebildet sein.

Abmessungen, Form und Detailausführung der ersten Schicht 57 und der zweiten Schicht 59 lassen sich je nach der lokalen Anforderung der Kühlmediumparameter p, t und der Arbeitsmediumparameter P, T ausführen, um an der Drosselstelle 41 eine Temperaturabsenkung der Kühlmediumtemperatur t derart zu bewirken, dass bei wenigstens einem Teil des Kühlmediums 21 ein Phasenwechsel von einem flüssigen Zustand vor der Drosselstelle 41 zu einem dampfförmigen Zustand hinter der Drosselstelle 41 bewirkt wird.

FIG 6 zeigt im Detail ein in FIG 4 dargestelltes Drosselmittel in Form einer Taillierung 47 eines Zweigkühlkanals 25. Die dargestellte besonders bevorzugte Ausführungsform der Dampfturbinenkomponente 60 hat eine Wand 61, in deren oberflächennahen Bereich, die Drosselstelle 41 angeordnet ist. Das heißt, die Drosselstelle 41 ist innerhalb der Wand 61 relativ zu einer Mittelfläche 8 der Wand 61 zur Oberfläche 63 hin versetzt angeordnet. Insbesondere ist die Drosselstelle 41 in einem Abstand von nicht mehr als 50 % der Bauteildicke zur Oberfläche 63 angeordnet. Für einen häufig vorkommenden Fall einer Bauteildicke kann ein solcher Abstand bis zu 100 mm betragen. Bevorzugterweise ist die Drosselstelle 41 in einem Abstand von nicht mehr als 25 % der Bauteildicke zur Oberfläche 63 angeordnet. Für einen häufig vorkommenden Fall kann der Abstand mehr als 10 mm bis 20 mm betragen.

Das Kühlmedium 21 weist vor der Drosselstelle 41 einen Kühlmedium(-Innen)druck pᵢ und eine Kühlmedium(-Innen)temperatur tᵢ auf und hinter der Drosselstelle 41 einen Kühlmedium(-Außen)druck pₐ und eine Kühlmedium(-Außen)temperatur tₐ auf. An der Drosselstelle 41 wird also eine Temperaturabsenkung Δt = tₐ- tᵢ bewirkt. Durch die Drosselung an der Drosselstelle 41 aufgrund des Drosselmittels in Form einer Taillierung 47 wird also eine weitere unmittelbar an der Drosselstelle wirksame Temperaturabsenkung Δt = tₐ - tᵢ erzielt - und zwar durch den in Strömungsrichtung des Kühlmediums 21 eingestellten Druckabfall Δp des Kühlmediumdruckes, wobei sich der Druckabfall Δp als Differenz des Kühlmediumdruckes pᵢ und des Kühlmediumdruckes pₐ ergibt (Δp = pᵢ - pₐ).

Durch Einbringung des Drosselmittels 47 an der Drosselstelle 41 wird also im oberflächennahen Bereich der Oberfläche 63, ausgehend von der Drosselstelle 41, eine weitere unmittelbar an der Drosselstelle wirksame Temperaturabsenkung Δt erzielt, die zur Kühlung des Arbeitsmediums in der Hauptströmung genutzt wird. Der abführbare Wärmestrom Q' wird durch den Massenstrom des Kühlmediums 41 und die wirksame Differenztemperatur Δt sowie eine gegebenenfalls aufgenommene Verdampfungsenthalpie bestimmt. Aufgrund des Wärmeflusses Q' aus dem den gedrosselten Zweigkühlkanal 25 umgebenden Turbinenmaterial 65 heraus in den Zweigkühlkanal 25 hinein - also von heiß nach kalt - erfolgt eine Entspannung und Verdampfung des Kühlmediums 21, wobei in diesem oberflächennahen Bereich 66 die Verdampfungsenthalpie frei wird. Insbesondere ist unter dem oberflächennahen Bereich 66 ein Bereich zwischen der Drosselstelle 41 des Zweigkühlkanals 25 und der Öffnung 67 an der Oberfläche 63 zu verstehen. Die aufgenommene Verdampfungsenthalpie wird zur erhöhten Wärmeabfuhr genutzt. Bei einem Verfahren zum Kühlen einer z. B. in FIG 1 und 2 beispielhaft dargestellten Dampfturbine 10, 20 wird der Strömungskanal 15 mit einer Hauptströmung 17 eines fluiden Arbeitsmediums beaufschlagt. Darüber hinaus wird das Kühlsystem 19 mit einer Kühlmediumströmung 21 mit einem Kühlmediumdruck p und einer Kühlmediumtemperatur t beaufschlagt. In einem weiteren Verfahrensschritt wird mit wenigstens einem Strömungswiderstand in Form eines Drosselmittels 47 an einer oberflächennahen Drosselstelle 41 im Kühlsystem 19 in Strömungsrichtung des Kühlmediums 21 ein Druckabfall Δp des Kühlmediumdruckes pᵢ-pₐ über die Drosselstelle 41 eingestellt. Auf diese Weise wird an der Drosselstelle 41 eine Temperaturabsenkung Δt der Kühlmediumtemperatur t bewirkt, wobei im vorliegenden Beispiel des Verfahrens für wenigstens einen Teil des Kühlmediums 21 ein Phasenwechsel von einem flüssigen Zustand pᵢ, tᵢ vor der Drosselstelle 41 zu einem dampfförmigen Zustand pₐ, tₐ hinter der Drosselstelle 41 bewirkt wird.

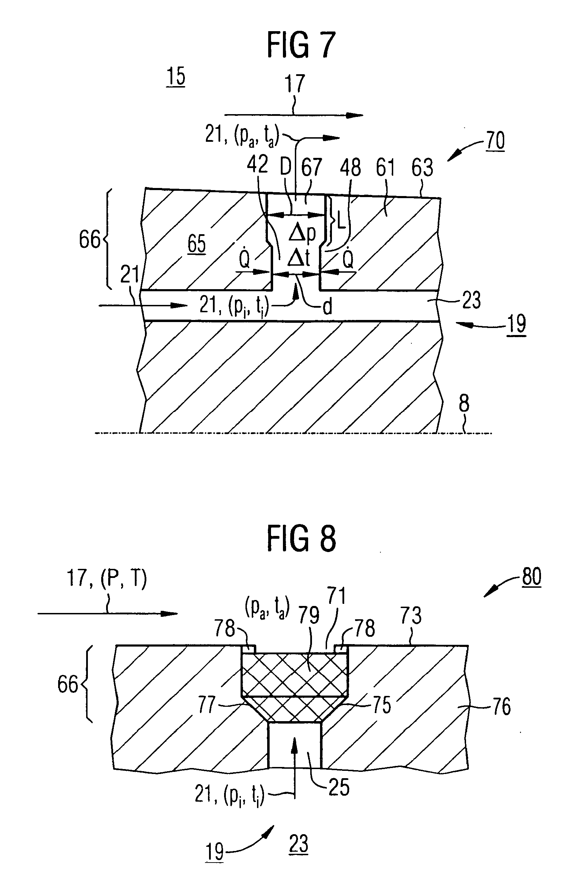

FIG 7 zeigt wiederum im Detail ein Drosselmittel, wie es beispielsweise in FIG 4 verwendet werden könnte. Das Drosselmittel der FIG 7 ist vorliegend in Form einer Verengung 48 eines Zweigkühlkanals 25 gebildet, wobei bei der hier gezeigten Ausführungsform die Verengung sich unmittelbar angrenzend an einen Hauptkühlkanal 23 in den Zweigkühlkanal 25 fortsetzt. Der weitere Verlauf des Zweigkühlkanals 25 zum Strömungskanal 15 hin ergibt sich in Form einer Aufweitung 42 des Zweigkühlkanals 25. Das Wirkprinzip eines solchen Drosselmittels der FIG 7 entspricht im Wesentlichen dem im Zusammenhang mit der FIG 6 erläuterten Wirkprinzip. Insbesondere wurden die übrigen wesentlichen mit gleicher Funktion versehenen Merkmale der FIG 7 im Vergleich zu FIG 6 mit den gleichen Bezugszeichen versehen.

Der Vorteil des hier erläuterten Drosselmittels in Form einer Verengung 48 besteht neben den im Zusammenhang mit der FIG 6 erläuterten Vorteilen vor allem darin, dass vorliegend eine Kühlung bereits im Bereich einer Abzweigung zwischen Hauptkühlkanal 23 und Zweigkühlkanal 25 erfolgen kann. Dies kann, wie in FIG 7 gezeigt, bereits im Bereich eines oberflächennahen Bereichs 66 sein, insbesondere dann, wenn der Hauptkühlkanal 23 relativ oberflächennah angeordnet ist. In einer Abwandlung der in FIG 7 gezeigten Ausführungsform könnte die gezeigte Verengung 48 jedoch auch außerhalb eines oberflächennahen Bereichs liegen, so dass im Bedarfsfall auch eine Kühlung insbesondere des Vollmaterials einer Dampfturbinenkomponente 70 erfolgt. Die Kühlwirkung kann sich je nach absoluten Abmessungen des Bereichs 66 natürlich bis zur Oberfläche 63 hin fortsetzen.

Ein weiterer Vorteil der in FIG 7 gezeigten Ausführungsform liegt auf der Herstellungsseite. Der Zweigkühlkanal 25 in der hier gezeigten Form mit einer Verengung 48 und einer Ausweitung 42 kann nämlich in besonders vorteilhafter Weise durch das Anbringen zweier hintereinander ausgeführten Bohrvorgängen mit unterschiedlichem Bohrdurchmesser durchgeführt werden. Zur Formgebung des hier gezeigten Zweigkühlkanals 25 wird nämlich eine Öffnung 67 zunächst dadurch hergestellt, dass eine Bohrung in die Wand 61 zunächst mit einem kleinen Durchmesser d erfolgt. An der gleichen Stelle der Öffnung 67 wird danach eine weitere Bohrung gesetzt. Die weitere Bohrung erfolgt jedoch mit einem größeren Durchmesser D und die weitere Bohrung wird nicht bis zum Hauptkühlkanal 23 fortgeführt. Vielmehr wird die Bohrtiefe L für eine zweckmäßige Drosselung des Kühlmittels im Bereich der Verengung 48 je nach Bedarfsfall und Stärke der 61 gewählt.

FIG 8 zeigt einen weiteren Teil einer besonders bevorzugten Ausführungsform 80 einer Dampfturbinen-Komponente, bei der ein Kühlsystem 19 einen nicht näher dargestellten Hauptkühlkanal 23 und einen Zweigkühlkanal 25 mit einer Öffnung 71 an der Oberfläche 73 der Ausführungsform 80 aufweist. Vorliegend ist ein Drosselmittel an der oberflächennahen Drosselstelle 75 im Zweigkühlkanal 25 in der Wand 76 angeordnet. Das Drosselmittel ist vorliegend in Form der Öffnung 71 des Kühlsystems 19 an der Oberfläche 73 gebildet. Dazu weist die Öffnung 71 des Zweigkühlkanals 25 eine Taillierung 77 auf. Die Öffnung 71 ist darüber hinaus mit einem halbdurchlässigen Stopfen 79 versehen, der in die Öffnung 71 des Zweigkühlkanals 25 eingesetzt und mit Arretierung 78 festgemacht ist. Aufgrund der erschwerten Durchströmung des halbdurchlässigen Stopfens entfaltet sich die Drosselwirkung. Der Stopfen 79 ist vorliegend mit einem engmaschigen Drahtgeflecht gebildet. An solch einer Drosselstelle 75 kann ein Kühlmedium 21 z. B. von einer Kühlmediuminnentemperatur tᵢ in Höhe von etwa 500 °C auf eine Kühlmediumaußentemperatur tₐ in Höhe von 475 °C abgekühlt werden, so dass sich eine Temperaturabsenkung Δt in Höhe von 25 K ergibt, die zusätzlich zu der Temperaturdifferenz zwischen Kühlmediumtemperatur tᵢ und Arbeitsmediumtemperatur T zur Kühlung des Arbeitsmediums in der Hauptströmung 17 zur Verfügung steht.

Zusammenfassend ist es also notwenig, u. a. den Druck und die Temperatur bei einer Dampfturbine zu erhöhen, um den Wirkungsgrad von thermischen Anlagen zu erhöhen. In der Regel bewirkt dies eine Schwächung der bei diesen erhöhten Parametern eingesetzten Werkstoffen. Daher erweist es sich als vorteilhaft, solche thermisch hoch beanspruchten Dampfturbinen-komponenten zu kühlen. Neben der Realisierung hoher Betriebstemperaturen mit erhöhten Wirkungsgraden lassen sich dann bei niedrigeren Temperaturen durch die Kühlung kostengünstigere, niedrigere legierte Materialien verwenden.

Eine Dampfturbinen-Komponente 10, 20, 40, 50, 60, 70, 80 weist eine einen Strömungskanal 15 begrenzende Oberfläche 45, 53, 63, 73 auf, wobei der Strömungskanal 15 zur Aufnahme einer Hauptströmung 17 eines fluiden Arbeitsmediums vorgesehen ist. Die Dampfturbinen-Komponente 10, 20, 40, 50, 60, 70, 80 weist ein an ihrer Oberfläche 45, 53, 63, 73 eine Öffnung 46, 55, 67, 71 zum Strömungskanal 15 aufweisendes, in der Komponente 10, 20, 40, 50, 60, 70, 80 integriertes Kühlsystem 19 zur Aufnahme einer Kühlmediumströmung 21 mit einem Kühlmediumdruck p und einer Kühlmediumtemperatur t auf. Um eine besonders effektive Kühlung der Dampfturbinen-Komponente 10, 20, 40, 50, 60, 70, 80 zu gewährleisten, weist gemäß dem vorgelegten Konzept das Kühlsystem 19 wenigstens einen Strömungswiderstand in Form eines Drosselmittels an einer oberflächennahen Drosselstelle 41, 75 auf. Das Drosselmittel stellt in Strömungsrichtung des Kühlmediums einen Druckabfall Δp = pₐ - pᵢ des Kühlmediumdruckes p über die Drosselstelle 41, 75 derart ein, dass an der Drosselstelle 41, 75 eine Temperaturabsenkung Δt = tₐ- tᵢ der Kühlmediumtemperatur t bewirkt ist. Insbesondere ist bei wenigstens einem Teil des Kühlmediums ein Phasenwechsel von einem flüssigen Zustand pᵢ, tᵢ vor der Drosselstelle 41, 75 zu einem dampfförmigen Zustand pₐ, tₐ hinter der Drosselstelle 41, 75 bewirkt.

## Patentansprüche

1. Dampfturbinen-Komponente (10, 20, 40, 50, 60, 70, 80), die eine einen Strömungskanal (15) begrenzende Oberfläche (45, 53, 63, 73) aufweist, wobei der Strömungskanal (15) zur Aufnahme einer Hauptströmung (17) eines fluiden Arbeitsmediums vorgesehen ist,
und die ein an ihrer Oberfläche (45, 53, 63, 73) eine Öffnung (46, 55, 67, 71) zum Strömungskanal (15) aufweisendes Kühlsystem (19) zur Aufnahme einer Kühlmediumströmung (21) mit einem Kühlmediumdruck (p) und einer Kühlmediumtemperatur (t) aufweist, wobei
das Kühlsystem (19) wenigstens einen Strömungswiderstand in Form eines Drosselmittels an einer Drosselstelle (41, 75) aufweist, das derart ausgebildet ist,
dass das in Strömungsrichtung des Kühlmediums einen Druckabfall (Δp = pₐ- pᵢ) des Kühlmediumdruckes (p) über die Drosselstelle (41, 75) derart einstellbar ist,
dass an der Drosselstelle (41, 75) eine Temperaturabsenkung (Δt = tₐ - tᵢ) der Kühlmediumtemperatur (t) bewirkt ist,
**dadurch gekennzeichnet, dass**
das Kühlsystem (19) einen Hauptkühlkanal (23) aufweist, der sich in Längsrichtung (9) der Komponente (10, 20, 40, 50, 60, 70, 80) erstreckt, und
das einen Zweigkühlkanal (25) aufweist, der vom Hauptkühlkanal (23) abzweigt und zum Strömungskanal (15) offen ist.

2. Dampfturbinen-Komponente (10, 20, 40, 50, 60, 70, 80) nach Anspruch 1,
**dadurch gekennzeichnet, dass**
das Drosselmittel ausgebildet ist, dass bei wenigstens einem Teil des Kühlmediums ein Phasenwechsel von einem flüssigen Zustand (pᵢ, tᵢ) vor der Drosselstelle (41, 75) zu einem dampfförmigen Zustand (pₐ, tₐ) hinter der Drosselstelle (41, 75) bewirkt ist.

3. Dampfturbinen-Komponente (10, 20, 40, 50, 60, 70, 80) nach Anspruch 1 oder 2,
**dadurch gekennzeichnet, dass**
die Drosselstelle (41, 75) an einer Wand (43, 61) der Komponente (60, 70) relativ zu einer Mittelfläche (8) der Wand (43, 61) zur Oberfläche (45, 53, 63, 73) hin versetzt angeordnet ist.

4. Dampfturbinen-Komponente (40, 50, 60, 70, 80) nach einem der Ansprüche 1 bis 3 in Form einer Dampfturbinen-Schaufel (40).

5. Dampfturbinen-Komponente (10, 20, 50, 60, 70, 80) nach einem der Ansprüche 1 bis 3,
**dadurch gekennzeichnet, dass**
die Komponente (10, 20, 50, 60, 70) eine Anzahl von, mehrere Schaufeln aufweisende, in Längsrichtung (9) hintereinander angeordnete Schaufelstufen (7, 35) trägt, die sich jeweils in den Strömungskanal (15) erstrecken.

6. Dampfturbinen-Komponente (10, 20, 50, 60, 70, 80) nach Anspruch 5 in Form eines Dampfturbinen-Rotors (31).

7. Dampfturbinen-Komponente (10, 20, 50, 60, 70) nach Anspruch 5 in Form eines Dampfturbinen-Gehäuses (5).

8. Dampfturbinen-Komponente (10, 20, 50, 60, 70, 80) nach einem der Ansprüche 5 bis 7,
**dadurch gekennzeichnet, dass**
sich ein Hauptkühlkanal (23) über eine Ausdehnung wenigstens einer Schaufelreihe (3, 7, 27, 35) erstreckt.

9. Dampfturbinen-Komponente (10, 20, 50, 60, 70) nach Anspruch 8,
**dadurch gekennzeichnet, dass**
ein Zweigkühlkanal (25) einen eine Schaufelreihe (3, 7, 27, 35) umgebenden Ringkanal aufweist.

10. Dampfturbinen-Komponente (10, 20, 50, 60, 70, 80) nach Anspruch 8 oder 9,
**dadurch gekennzeichnet, dass**
der Zweigkühlkanal (25) eine oder mehrere von einem Ringkanal ausgehende Schaufelkanäle aufweist, die in eine oder eine Anzahl oder alle Schaufeln einer Schaufelreihe (3, 7, 27, 35) führen.

11. Dampfturbinen-Komponente (10, 20, 40, 50, 60, 70, 80) nach einem der Ansprüche 8 bis 10,
**dadurch gekennzeichnet, dass**
das Drosselmittel an einer, insbesondere oberflächennahen, Drosselstelle (41, 75) in einem Hauptkühlkanal (23) angeordnet ist.

12. Dampfturbinen-Komponente (10, 20, 40, 50, 60, 70, 80) nach einem der Ansprüche 8 bis 11,
**dadurch gekennzeichnet, dass**
das Drosselmittel an einer, insbesondere oberflächennahen, Drosselstelle (41, 75) in einem Zweigkühlkanal (25) angeordnet ist.

13. Dampfturbinen-Komponente (10, 20, 50, 60, 70, 80) nach Anspruch 8 oder 9,
**dadurch gekennzeichnet, dass**
das Drosselmittel an einer, insbesondere oberflächennahen, Drosselstelle (41, 75) in einem Ringkanal angeordnet ist.

14. Dampfturbinen-Komponente (10, 20, 40, 50, 60, 70, 80) nach einem der Ansprüche 8 bis 13,
**dadurch gekennzeichnet, dass**
das Drosselmittel an einer, insbesondere oberflächennahen, Drosselstelle (41, 75) in einem Schaufelkanal angeordnet ist.

15. Dampfturbinen-Komponente (10, 20, 40, 50, 60, 70, 80) nach einem der Ansprüche 1 bis 14,
**dadurch gekennzeichnet, dass**
das Drosselmittel eine geometrisch feste Form aufweist.

16. Dampfturbinen-Komponente (10, 20, 40, 50, 60, 70, 80) nach einem der Ansprüche 1 bis 15,
**dadurch gekennzeichnet, dass**
das Drosselmittel in Form der Öffnung (71) des Kühlsystems (19) gebildet ist.

17. Dampfturbinen-Komponente (10, 20, 40, 60, 70, 80) nach einem der Ansprüche 1 bis 16,
**dadurch gekennzeichnet, dass**
das Drosselmittel in Form einer Taillierung (47, 77) eines Kühlkanals (23, 25) und/oder der Öffnung (71) des Kühlsystems (19) gebildet ist.

18. Dampfturbinen-Komponente (10, 20, 40, 70, 80) nach einem der Ansprüche 1 bis 17,
**dadurch gekennzeichnet, dass**
das Drosselmittel in Form eines halbdurchlässigen Stopfens (49, 79) in einem Kühlkanal (23, 25) und/oder der Öffnung (46, 71) des Kühlsystems (19) gebildet ist.

19. Dampfturbinen-Komponente (10, 20, 50, 80) nach einem der Ansprüche 1 bis 8,
**dadurch gekennzeichnet, dass**
das Drosselmittel in Form einer halbdurchlässigen Verkleidung (51) im Bereich der Öffnung (55) zum Strömungskanal (15) auf der Oberfläche (53) der Komponente (50) gebildet ist.

20. Dampfturbine (10, 20), insbesondere Hochtemperatur-Dampfturbine (10, 20), mit einer Dampfturbinen-Komponente (40, 50, 60, 70) nach einem der vorhergehenden Ansprüche.

21. Verfahren zum Kühlen einer Dampfturbine (10, 20) gemäß Anspruch 20,
wobei
- der Strömungskanal (15) mit einer Hauptströmung (17) eines fluiden Arbeitsmediums beaufschlagt wird, und
- das Kühlsystem (15) mit einer Kühlmediumströmung (21), mit einem Kühlmediumdruck (p) und einer Kühlmediumtemperatur (t), beaufschlagt wird,
**dadurch gekennzeichnet, dass**
mit wenigstens einem Strömungswiderstand in Form eines Drosselmittels an einer Drosselstelle (41, 75) im Kühlsystem (19),
in Strömungsrichtung des Kühlmediums ein Druckabfall (Δp = pₐ - pᵢ) des Kühlmediumdruckes (p) über die Drosselstelle (41, 75) eingestellt wird, und an der Drosselstelle (41, 75) eine Temperaturabsenkung (Δt = tₐ - tᵢ) der Kühlmediumtemperatur (t) bewirkt wird.

22. Verfahren gemäß Anspruch 21, wobei
das Drosselmittel derart ausgebildet wird, dass für wenigstens einen Teil des Kühlmediums ein Phasenwechsel von einem flüssigen Zustand (pᵢ, tᵢ) vor der Drosselstelle (41, 75) zu einem dampfförmigen (pₐ, tₐ) Zustand hinter der Drosselstelle (41, 75) bewirkt wird.

23. Verfahren gemäß Anspruch 21 oder 22, wobei
der Kühlmediumdruck (p) im Kühlsystem mittels wenigstens einem weiteren Strömungswiderstand über einem Strömungsdruck (P) der Hauptströmung (17) gehalten wird.

24. Verwendung eines Drosselmittels an einer Drosselstelle (41, 75) als Strömungswiderstand im Kühlsystem (19) einer Dampfturbine (10, 20) nach Anspruch 20, um bei Betrieb der Dampfturbine (10, 20) in Strömungsrichtung des Kühlmediums mit einem Kühlmediumdruck (p) und einer Kühlmediumtemperatur (t) einen Druckabfall (Δp = pₐ - pᵢ) des Kühlmediumdruckes (p) über die Drosselstelle (41, 75) derart einzustellen, dass an der Drosselstelle (41, 75) eine Temperaturabsenkung (Δt = tₐ - tᵢ) der Kühlmediumtemperatur (t) bewirkt wird.

25. Verwendung nach Anspruch 24,
bei der für wenigstens einen Teil des Kühlmediums ein Phasenwechsel von einem flüssigen Zustand (pᵢ, tᵢ) vor der Drosselstelle (41, 75) zu einem dampfförmigen Zustand (pₐ, tₐ) hinter der Drosselstelle (41, 75) bewirkt wird.

## Claims

1. Steam turbine component (10, 20, 40, 50, 60, 70, 80), which has a surface (45, 53, 63, 73) which defines a flow passage (15), wherein the flow passage (15) is provided for intake of a main flow (17) of a fluid working medium,
and which has a cooling system (19) for intake of a cooling medium flow (21) at a cooling medium pressure (p) and a cooling medium temperature (t), which cooling system has an opening (46, 55, 67, 71) on its surface (45, 53, 63, 73) to the flow passage (15), wherein
the cooling system (19) has at least one flow resistance in the form of a restricting device at a restricting point (41, 75), which restricting device is formed in such a way
that a pressure drop (Δp = pₐ - pᵢ) of the cooling medium pressure (p) is establishable across the restricting point (41, 75) in the flow direction of the cooling medium in such a way
that a temperature lowering (Δt = tₐ - tᵢ) of the cooling medium temperature (t) is effected at the restricting point (41, 75),
**characterized in that**
the cooling system (19) has a main cooling passage (23) which extends in the longitudinal direction (9) of the component (10, 20, 40, 50, 60, 70, 80), and
which has a branch cooling passage (25) which branches from the main cooling passage (23) and is open to the flow passage (15).

2. Steam turbine component (10, 20, 40, 50, 60, 70, 80) according to Claim 1,
**characterized in that**
the restricting device is formed so that a phase change from a liquid state (pᵢ, tᵢ) upstream of the restricting point (41, 75) to a vapourous state (pₐ, tₐ) downstream of the restricting point (41, 75) is effected in at least some of the cooling medium.

3. Steam turbine component (10, 20, 40, 50, 60, 70, 80) according to Claim 1 or 2,
**characterized in that**
the restricting point (41, 75) is located on a wall (43, 61) of the component (60, 70) in an offset manner relative to a centre face (8) of the wall (43, 61) in the direction of the surface (45, 53, 63, 73).

4. Steam turbine component (40, 50, 60, 70, 80) according to one of Claims 1 to 3 in the form of a steam turbine blade (40).

5. Steam turbine component (10, 20, 50, 60, 70, 80) according to one of Claims 1 to 3,
**characterized in that**
the component (10, 20, 50, 60, 70) supports a number of blade stages (7, 35) which extend in the flow passage (15) in each case, which blade stages are arranged in series in the longitudinal direction (9), and have a plurality of blades.

6. Steam turbine component (10, 20, 50, 60, 70, 80) according to Claim 5 in the form of a steam turbine rotor (31).

7. Steam turbine component (10, 20, 50, 60, 70) according to Claim 5 in the form of a steam turbine casing (5).

8. Steam turbine component (10, 20, 50, 60, 70, 80) according to one of Claims 5 to 7,
**characterized in that**
a main cooling passage (23) extends over an extent of at least one blade row (3, 7, 27, 35).

9. Steam turbine component (10, 20, 50, 60, 70) according to Claim 8,
**characterized in that**
a branch cooling passage (25) has an annular passage which encompasses a blade row (3, 7, 27, 35).

10. Steam turbine component (10, 20, 50, 60, 70, 80) according to Claim 8 or 9,
**characterized in that**
the branch cooling passage (25) has one of more blade passages which extend from an annular passage, which blade passages lead into one or a number or all of the blades of a blade row (3, 7, 27, 35).

11. Steam turbine component (10, 20, 40, 50, 60, 70, 80) according to one of Claims 8 to 10,
**characterized in that**
the restricting device is located in a main cooling passage (23) at a restricting point (41, 75) which is especially close to the surface.

12. Steam turbine component (10, 20, 40, 50, 60, 70, 80) according to one of Claims 8 to 11,
**characterized in that**
the restricting device is located in a branch cooling passage (25) at a restricting point (41, 75) which is especially close to the surface.

13. Steam turbine component (10, 20, 50, 60, 70, 80) according to Claim 8 or 9,
**characterized in that**
the restricting device is located in an annular passage at a restricting point (41, 75) which is especially close to the surface.

14. Steam turbine component (10, 20, 40, 50, 60, 70, 80) according to one of Claims 8 to 13,
**characterized in that**
the restricting device is located in a blade passage at a restricting point (41, 75) which is especially close to the surface.

15. Steam turbine component (10, 20, 40, 50, 60, 70, 80) according to one of Claims 1 to 14,
**characterized in that**
the restricting device has a geometrically fixed shape.

16. Steam turbine component (10, 20, 40, 50, 60, 70, 80) according to one of Claims 1 to 15,
**characterized in that**
the restricting device is formed in the form of the opening (71) of the cooling system (19).

17. Steam turbine component (10, 20, 40, 60, 70, 80) according to one of Claims 1 to 16,
**characterized in that**
the restricting device is formed in the form of a waisting (47, 77) of a cooling passage (23, 25) and/or a waisting of the opening (71) of the cooling system (19).

18. Steam turbine component (10, 20, 40, 70, 80) according to one of Claims 1 to 17,
**characterized in that**
the restricting device is formed in the form of a semipermeable plug (49, 79) in a cooling passage (23, 25) and/or in the opening (46, 71) of the cooling system (19).

19. Steam turbine component (10, 20, 50, 80) according to one of Claims 1 to 8,
**characterized in that**
the restricting device is formed in the form of a semipermeable lining (51) on the surface (53) of the component (50) in the region of the opening (55) to the flow passage (15).

20. Steam turbine (10, 20), especially high-temperature steam turbine (10, 20), with a steam turbine component (40, 50, 60, 70) according to one of the preceding claims.

21. Method for cooling a steam turbine (10, 20) according to Claim 20,
wherein
- the flow passage (15) is exposed to admission of a main flow (17) of a fluid working medium, and
- the cooling system (15) is exposed to admission of a cooling medium flow (21), at a cooling medium pressure (p) and a cooling medium temperature (t),
**characterized in that**
by at least one flow resistance in the form of a restricting device at a restricting point (41, 75) in the cooling system (19),
a pressure drop (Δp = pₐ - pᵢ) of the cooling medium pressure (p) is established across the restricting point (41, 75) in the flow direction of the cooling medium, and a temperature lowering (Δt = tₐ - tᵢ) of the cooling medium temperature (t) is effected at the restricting point (41, 75).

22. Method according to Claim 21, wherein
the restricting device is formed in such a way a phase change from a liquid state (pᵢ, tᵢ) upstream of the restricting point (41, 75) to a vapourous state (pₐ, tₐ) downstream of the restricting point (41, 75) is effected for at least some of the cooling medium.

23. Method according to Claim 21 or 22, wherein
the cooling medium pressure (p) in the cooling system is maintained above a flow pressure (P) of the main flow (17) by means of at least one additional flow resistance.

24. Use of a restricting device at a restricting point (41, 75) as a flow resistance in the cooling system (19) of a steam turbine (10, 20) according to Claim 20 in order to establish during operation of the steam turbine (10, 20) a pressure drop (Δp = pₐ - pᵢ) of the cooling medium pressure (p) across the restricting point (41, 75) in the flow direction of the cooling medium, at a cooling medium pressure (p) and a cooling medium temperature (t), in such a way that a temperature lowering (Δt = tₐ - tᵢ) of the cooling medium temperature (t) is effected at the restricting point (41, 75).

25. Use according to Claim 24,
in which a phase change from a liquid state (pᵢ, tᵢ) upstream of the restricting point (41, 75) to a vapourous state (pₐ, tₐ) downstream of the restricting point (41, 75) is effected for at least some of the cooling medium.

## Revendications

1. Elément (10, 20,40, 50, 60, 70, 80) de turbine à vapeur, qui a une surface (45, 53, 63, 73) délimitant un canal (15) d'écoulement, le canal (15) d'écoulement étant prévu pour recevoir un courant (17) principal d'un milieu fluide de travail,
et qui a un système (19) de refroidissement ayant sur sa surface (45, 53, 63, 73) une ouverture (46, 55 ,67 ,71) vers le canal (15) d'écoulement pour la réception d'un courant (21) d'un milieu de refroidissement ayant une pression (p) de milieu de refroidissement et une température (t) de milieu de refroidissement, dans lequel le système (19) de refroidissement a au moins une résistance à l'écoulement sous la forme d'un moyen d'étranglement en un point (41, 75) d'étranglement, qui est constitué de façon
à ce qu'une perte de charge (Δp = Pₐ - pᵢ) de la pression (p) du milieu de refroidissement, dans le sens d'écoulement du milieu de refroidissement, puisse être réglé par le point (41, 75) d'étranglement,
de façon à provoquer au point (41, 75) d'étranglement un abaissement (Δt = tₐ - tᵢ) de la température (t) du milieu de refroidissement,
**caractérisé en ce que**
le système (19) de refroidissement a un canal (23) de refroidissement principal, qui s'étend dans la direction (9) longitudinal de l'élément (10, 20,40, 50, 60, 70, 80) et
qui a un canal (25) de refroidissement de dérivation, qui bifurque du canal (23) de refroidissement principal et est ouvert vers le canal (15) d'écoulement.

2. Elément (10, 20,40, 50, 60, 70, 80) de turbine à vapeur suivant la revendication 1,
**caractérisé en ce que**
le moyen d'étranglement est constitué de façon à ce que pour au moins une partie du milieu de refroidissement il est provoqué un changement de phase d'un état (pᵢ, tᵢ)du liquide en amont du point (41, 75) d'étranglement à un état (pₐ, tₐ) sous forme vapeur en aval du point (41, 75) d'étranglement.

3. Elément de turbine à vapeur (10, 20,40, 50, 60, 70, 80) suivant la revendication 1 ou 2,
**caractérisé**
**en ce que** le point (41, 75)d'étranglement est disposé de manière décalé vers la surface (45, 53, 63,73) sur une paroi (43, 61) de l'élément (60, 70) par rapport à une surface (8) médiane de la paroi (43, 61).

4. Elément de turbine à vapeur (40, 50, 60, 70, 80) suivant l'une des revendications 1 à 3, sous la forme d'une aube (40) de turbine à vapeur.

5. Elément (10, 20, 40, 50, 60, 70, 80) de turbine à vapeur suivant la revendication 1 à 3,
**caractérisé en ce que**,
l'élément (10, 20, 50, 60, 70) porte un certain nombre d'étages (7, 35) d'aubes ayant plusieurs aubes, se succédant dans la direction (9) longitudinale et s'étendant respectivement dans le canal (15) d'écoulement

6. Elément (10, 20, 40, 50, 60, 70, 80) de turbine à vapeur suivant la revendication 5, sous la forme d'un rotor (31) de turbine à vapeur.

7. Elément (10, 20, 50, 60, 70) de turbine à vapeur suivant la revendication 5, sous la forme d'un carter (5) de turbine à vapeur.

8. Elément (10, 20, 50, 60, 70, 80) de turbine à vapeur suivant l'une des revendications 5 à 7,
**caractérisé en ce qu'**un canal (23) de refroidissement principal s'étend sur une étendue d'au moins une rangée (3, 7, 27,35) d'aubes.

9. Elément (10, 20, 50, 60, 70) de turbine à vapeur suivant la revendication 8,
**caractérisé en ce qu'**un canal (25) de refroidissement de dérivation a un canal annulaire entourant une rangée (3, 7, 27, 35) d'aubes.

10. Elément (10, 20, 50, 60, 70, 80) de turbine à vapeur suivant la revendication 8 ou 9,
**caractérisé en ce que** le canal (25) de refroidissement de dérivation a un ou plusieurs canaux d'aube partant d'un canal annulaire et menant à une ou à un certain nombre ou à toutes les aubes d'une rangée (3, 7, 27, 35) d'aubes.

11. Elément (10, 20, 40, 50, 60, 70, 80) de turbine à vapeur suivant l'une des revendications 8 à 10,
**caractérisé en ce que**
le moyen d'étranglement est disposé dans un canal (23) principal de refroidissement en un point (41, 75) d'étranglement, notamment proche de la surface.

12. Elément (10, 20, 40, 50, 60, 70, 80) de turbine à vapeur suivant l'une des revendications 8 à 11,
**caractérisé en ce que**
le moyen d'étranglement est disposé dans un canal (25) de dérivation de refroidissement en un point (41, 75) d'étranglement, notamment proche de la surface.

13. Elément (10, 20, 50, 60, 70, 80) de turbine à vapeur suivant l'une des revendications 8 ou 9,
**caractérisé en ce que** le moyen d'étranglement et disposé dans un canal annulaire en un point (41, 75) d'étranglement notamment proche de la surface.

14. Elément (10, 20, 40, 50, 60, 70, 80) de turbine à vapeur suivant l'une des revendications 8 à 13,
**caractérisé en ce que** le moyen d'étranglement est disposé dans un canal d'aube en un point (41, 75) d'étranglement, notamment proche de la surface.

15. Elément (10, 20, 40, 50, 60, 70, 80) de turbine à vapeur suivant l'une des revendications 1 à 14,
**caractérisé en ce que** le moyen d'étranglement a une forme fixe géométriquement.

16. Elément (10, 20, 40, 50, 60, 70, 80) de turbine à vapeur suivant l'une des revendications 1 à 15,
**caractérisé en ce que** le moyen d'étranglement est conformé à la forme de l'ouverture (71) du système (19) de refroidissement.

17. Elément (10, 20, 40, 60, 70, 80) de turbine à vapeur suivant l'une des revendications 1 à 16,
**caractérisé en ce que** le moyen d'étranglement est conformé à la forme d'une conformation (47, 77) d'un canal (23, 25) de refroidissement et/ou de l'ouverture (71) du système (19) de refroidissement.

18. Elément (10, 20, 40, 70, 80) de turbine à vapeur suivant l'une des revendications 1 à 17,
**caractérisé en ce que** le moyen d'étranglement est conformé à la forme d'un bouchon (49, 79) semi perméable dans un canal (23, 25) de refroidissement et/ou de l'ouverture (46, 71) du système (19) de refroidissement.

19. Elément (10, 20, 50, 80) de turbine à vapeur suivant l'une des revendications 1 à 8,
**caractérisé en ce que** l'agent d'étranglement est conformé à la surface (53) de l'élément (50) à la forme d'un garnissage (51) semi-perméable dans la partie d'ouverture (55) allant vers le canal (15) d'écoulement.

20. Turbine (10, 20) à vapeur, notamment turbine (10, 20) à vapeur à haute température ayant un élément (40, 50, 60, 70) de turbine à vapeur suivant l'une des revendications précédentes.

21. Procédé de refroidissement d'une turbine (10, 20) suivant la revendication 20,
dans lequel
- on alimente le canal (15) d'écoulement en un courant (17) principal d'un milieu fluide de travail, et
- on alimente le système (15) de refroidissement en un courant (21) de milieu de refroidissement, ayant une pression (p) de milieu de refroidissement et une température (t) de milieu de refroidissement,
**caractérisé en ce que**
on règle par au moins une résistance à l'écoulement sous la forme d'un moyen d'étranglement en un point (41, 75) d'étranglement dans le système (19) de refroidissement
dans le sens de l'écoulement du milieu de refroidissement une perte de charge (Δp = pₐ - pᵢ) de la pression (p) du milieu de refroidissement par le point (41, 75) d'étranglement et on provoque au point (41, 75) d'étranglement l'abaissement (Δt = tₐ - tᵢ) de la température (t) du milieu de refroidissement.

22. Procédé suivant la revendication 21, dans lequel le moyen d'étranglement est constitué de façon à provoquer pour au moins une partie du milieu de refroidissement en un changement de phase d'un état (pᵢ, tᵢ) liquide en amont du point (41, 75) d'étranglement en un état sous forme (pₐ, tₐ) vapeur en aval du point (41, 75) d'étranglement.

23. Procédé suivant la revendication 21 ou 22, dans lequel
on maintient la pression (p) du milieu de refroidissement dans le système de refroidissement au moyen d'au moins une autre résistance à l'écoulement au-dessus d'une pression (p) d'écoulement du courant (17) principal.

24. L'utilisation d'un moyen d'étranglement en un point (41, 75) d'étranglement comme résistance à l'écoulement dans le système (19) de refroidissement d'une turbine (10, 20) à vapeur suivant la revendication 20, pour, lors du fonctionnement de la turbine (10, 20) à vapeur, régler, dans le sens de l'écoulement du milieu de refroidissement ayant une pression (p) de milieu de refroidissement et une température (t) de milieu de refroidissement, une perte de charge (Δp = pₐ - pᵢ) de la pression (p) du milieu de refroidissement par le point (41, 75) d'étranglement de façon à provoquer au point (41, 75) d'étranglement un abaissement (Δt = tₐ - tᵢ) de la température (t) du milieu de refroidissement.

25. L'utilisation suivant la revendication 24,
dans laquelle pour au moins une partie du milieu de refroidissement, il est provoqué un changement de phase d'un état (pᵢ, tᵢ) liquide en amont du point (41, 75) d'étranglement à un état (pₐ, tₐ) sous forme vapeur en aval du point (41, 75) d'étranglement.
